# EUROPÄISCHE PATENTSCHRIFT

(11) **EP 3 013 917 B1**
(45) Veröffentlichungstag und Bekanntmachung des Hinweises auf die Patenterteilung: **27.03.2019**
(21) Anmeldenummer: 14728908.6
(22) Anmeldetag: 02.06.2014
(51) Int. Cl.: C09J 133/08, C08K 5/13, C08L 61/00, C09J 7/10, C09J 7/38

(54) **POLARE KLEBHARZE FÜR NIEDERENERGETISCHE OBERFLÄCHEN**
POLAR ADHESIVE RESINS FOR LOW-ENERGY SURFACES
RÉSINES ADHÉSIVES POLAIRES POUR SURFACES À FAIBLE ÉNERGIE

(30) Priorität: 26.06.2013 DE 102013212345
(43) Veröffentlichungstag der Anmeldung: 04.05.2016
(73) Patentinhaber: tesa SE, 22848 Norderstedt (DE)
(72) Erfinder: SPIES, Manfred, 24576 Bad Bramstedt (DE); LI, Yuan, 20251 Hamburg (DE); IHRIG, Ralf, 25451 Quickborn (DE)
(86) Internationale Anmeldenummer: PCT/EP2014/061345
(87) Internationale Veröffentlichungsnummer: WO 2014/206686

(56) Entgegenhaltungen:
- EP-A1- 2 352 788
- US-A- 5 874 143

## Beschreibung

Die Erfindung betrifft die Verwendung von Klebharzen, insbesondere von Terpenphenolharzen in Polyacrylathaftklebemassen zur Verklebung auf niederenergetischen Oberflächen.

Polyacrylate auf Basis von Acrylsäureestern mit definierten Kettenlängen der Esterseitengruppen zeigen haftklebrige Eigenschaften. Geht die Länge der Esterseitengruppen über ein bestimmtes Maß hinaus, so gehen die haftklebrigen Eigenschaften aufgrund der Kristallisation des Polymeren verloren.

Die Möglichkeit, das gewünschte klebtechnische Eigenschaftsprofil von haftklebrigen Polyacrylaten nur über die Copolymerzusammensetzung einzustellen, ist jedoch limitiert. Aus diesem Grunde müssen auch Polyacrylathaftklebemassen häufig klebrig machende Harze hinzugefügt werden.

Als Harzkomponente für Polyacrylate kommen grundsätzlich sowohl synthetische Harze wie z.B. Terpenphenolharze oder auch Klebharze vom Kohlenwasserstofftyp, als auch Naturharze wie z.B. Kolophoniumderivate oder Polyterpene in reiner Form oder als Mischung verschiedener Harze in Betracht. Im Falle von Polyacrylatdispersionen sind Harzdispersionen mit polaren Basisharzen zu wählen.

Reine Kohlenwasserstoffharze vom C5-Typ zeigen aufgrund zu geringer Polarität eine nicht ausreichende Kompatibilität zu Polyacrylaten. Geht man über zu aromatisch modifizierten Kohlenwasserstoffharzen nimmt die Kompatibilität mit Polyacrylaten zu, da die Polarität steigt. Cyclopentadienharze zeigen ebenfalls zu geringe Polaritäten, um eine Kompatibilität mit Polyacrylaten zu ermöglichen. Geht man über zu den entsprechenden hydrierten Harzen, so nimmt die Polarität weiter ab.

Eine Übersicht über mögliche geeignete Klebharze findet sich in: Donatas Satas, Handbook of Pressure Sensitive Adhesive Technology , 2. Edition 1.Acrylic Adhesives by G. Auchter, O. Aydin, A. Zettl, D. Satas S. 444-514 und 2.Tackifier Resins by James A. Schlademann S. 609-631.

Polyacrylate sind polare Gerüstpolymere. Damit ein Klebharz wirksam in einem elastomeren Gerüstpolymer klebrig machende Wirkung zeigt, müssen mehrere Kriterien erfüllt sein. Das Klebharz muss zum einen mit dem Gerüstpolymer kompatibel sein. Des Weiteren sollte der Glasübergangspunkt des Klebharzes signifikant über dem Glasübergangspunkt des Elastomeren liegen. Ergänzend dazu sollte die Molmasse des Klebharzes deutlich niedriger sein, als die Molmasse des elastomeren Gerüstpolymeren.

Angaben zur Glasübergangstemperatur T_{G} beziehen sich auf den mittels Dynamischer Differenzkalorimetrie bestimmbaren Glasumwandlungstemperatur-Wert Tg (Hälfte der Änderung der spezifischen Wärmekapazität) nach DIN 53765:1994-03, sofern im Einzelfall nichts anderes angegeben ist.

Aufgrund dieser Gegebenheiten stehen insbesondere Terpenphenolharze, aber auch aromatisch modifizierte KW-Harze und Kolophoniumderivate, hier insbesondere hydrierte Kolophoniumderivate, aufgrund des guten Alterungsverhaltens im Focus der Anwendungen.

Alle diese polaren Klebharze haben jedoch den Nachteil, dass die Wechselwirkung zu unpolaren Oberflächen wie z.B. Polyethylen oder anderen Polyolefinen eher schlecht ist. Diese Harze gehen eine gute Wechselwirkung mit den polaren Gerüstpolymeren ein, wechselwirken dagegen nur schwach mit unpolaren Substraten.

Eine Verbesserung der Wechselwirkung von reinen oder harzabgemischten Polyacrylhaftklebemassen mit unpolaren Substraten erfolgt üblicherweise durch eine Steuerung der Copolymerzusammensetzung, wobei der Anteil an eher unpolaren Comonomeren erhöht, und der Anteil an eher polaren Comonomeren wie z.B. Acrylsäure reduziert wird.

Allerdings hat sich gezeigt, dass allein die Steuerung der Copolymerzusammensetzung nicht ausreicht, um die gewünschte große Variationsbreite in den klebtechnischen Eigenschaftsprofilen zu erreichen.

Die EP 2 352 788 A offenbart beispielweise die Verwendung eines Klebharzes mit einem Erweichungspunkt bis 115 °C als Klebharz für Polyacrylathaftkleber für die Verklebung auf niederenergetischen Untergründen; ebenso die US 5,874,143 A, bei der der Haftklebstoff ein Acrylpolymer und ein Klebrigmacher enthält. Der Klebrigmacher kann ein Terpenphenolharz sein. Weder die EP 2 352 788 A noch die US 5,874,143 A ofenbaren jedoch einen Einfluss bestimmter Molmassenverteilungen der eingesetzten Klebharze auf eine besondere Eignung der Klebmassen für niederenergetische Untergründe.

Aufgabe der Erfindung war es daher, eine Möglichkeit aufzuzeigen, wie die Variationsbreite in den klebtechnischen Eigenschaften von Polyacrylat/Klebharz-Compounds für die Verwendung auf niederenergetischen Substraten vergrößert werden kann und insbesondere die Klebeigenschaften von Polyacrylat/Klebharz-Compounds auf niederenergetischen Substraten verbessert werden können.

Überraschenderweise wurde gefunden, dass auch über das Klebharz auf die klebtechnischen Eigenschaften bei der Verklebung auf niederenergetischen Untergründen Einfluss ausgeübt werden kann, und zwar indem ein Klebharz mit einem Erweichungspunkt bis 115°C mit einer definierten Molmassenverteilung verwendet wird, wobei das Klebharz eine Molmassenverteilung aufweist, die dadurch gekennzeichnet ist, dass das Integral der Kurve der Molmassenverteilung bis zu einer Molmasse von 350 g/mol mindestens 15% der Gesamtfläche unter der Kurve der Molmassenverteilung ausmacht. Erfindungsgemäß kommt als Klebharz ein Terpenphenolharz mit der vorstehend definierten Molmassenverteilung zum Einsatz.

Aufgrund dieser definierten Molmassenverteilung ist es möglich, die klebtechnischen Eigenschaften von Polyacrylat/Klebharz-Compounds bei der Anwendung auf niederenergetischen Substraten über das Klebharz zu steuern.

Unter "niederenergetischen Untergründen" bzw. "niederenergetischen Substraten" werden solche Untergründe bzw. Substrate verstanden, die eine Oberflächenenergie von Vorteilhafterweise kommt als Klebharz ein Terpenphenolharz mit der vorstehend definierten Molmassenverteilung zum Einsatz.

Wie bereits beschrieben kommt den Terpenphenolharzen als Tackifierharze für Polyacrylathaftkleber eine besondere Bedeutung zu. Diese Harze zeichnen sich durch eine hervorragende Kompatibilität mit polaren Gerüstpolymeren aus. Die mittlere Molmasse (Mw) von Terpenphenolharzen mit Erweichungspunkten zwischen 60 und 160°C, bevorzugt 80 und 140°C und besonders bevorzugt 95-115°C, liegt in einem Bereich von etwa 700 -1000 g/mol, an den sich ein niedermolekularer Bereich zu einer und ein höhermolekularer Bereich zur anderen Seite anschließt. Die üblichen Erweichungspunkte im Bereich von etwa 95-150°C sind über die Molmassenverteilungen einstellbar, sodass diese Harze wie im Übrigen auch andere Klebharze zur Einstellung des Glasübergangspunktes von Polyacrylat/Harz-Compounds eingesetzt werden können.

Die Molmassenverteilung von Makromolekülen wird üblicherweise über Mn (Zahlenmittel), Mw (Gewichtsmittel) und Mz (Zentrifugenmittel) beschrieben. Durch Division des Gewichtsmittels (Mw) durch das Zahlenmittel (Mn) erhält man die Polydispersität (Pd), die ein Maß für die Uneinheitlichkeit des Polymeren ist.

Im Rahmen der vorliegenden Schrift werden die Begriffe Molekulargewicht und Molmasse gleichbedeutend verwendet als Masse pro Stoffmenge.

Erfindungsgemäß wird dem Polyacrylathaftkleber ein Klebharz mit den vorstehend beschriebenen Eigenschaften zugesetzt. Es ist jedoch ebenfalls möglich, eine Mischung von mindestens zwei verschiedenen Klebharzen zu verwenden, von denen vorzugsweise jedes eine Molmassenverteilung aufweist, bei der das Integral der Kurve der Molmassenverteilung bis zu einer Molmasse von 350 g/mol mindestens 15% und vorzugsweise weniger als 20% der Gesamtfläche unter der Kurve der Molmassenverteilung ausmacht.

Die Herstellung eines erfindungsgemäßen Compounds ist auch möglich, wenn der Polyacrylathaftkleber in Form einer Dispersion vorliegt. In diesem Fall wird auch das mindestens eine Klebharz in Form einer Dispersion eingesetzt, wobei das Klebharz wiederum die erfindungsgemäße Molmassenverteilung aufweist.

weniger als 35 dyn/cm² aufweisen. Solche Untergründe sind insbesondere Polyolefine wie Polypropylen (PP), Polyethylen (PE), und zwar sowohl Hochdruck-Polyethylen (LDPE) als auch Niederdruck-Polyethylen (HDPE) oder ultrahochmolekulares Polyethylen (UHMWPE), oder Ethylen-Propylen-Dien-Monomer (EPDM), UV-härtende Lacke und Pulverbeschichtungen.

Besonders geeignet ist ein Klebharz, bei dem das Integral der Kurve der Molmassenverteilung bis zu einer Molmasse von 350 g/mol höchstens 20% der Gesamtfläche unter der Kurve der Molmassenverteilung ausmacht.

Wie bereits beschrieben kommt den Terpenphenolharzen als Tackifierharze für Polyacrylathaftkleber eine besondere Bedeutung zu. Diese Harze zeichnen sich durch eine hervorragende Kompatibilität mit polaren Gerüstpolymeren aus. Die mittlere Molmasse (Mw) von Terpenphenolharzen mit Erweichungspunkten zwischen 60 und 160°C, bevorzugt 80 und 140°C und besonders bevorzugt 95-115°C, liegt in einem Bereich von etwa 700 -1000 g/mol, an den sich ein niedermolekularer Bereich zu einer und ein höhermolekularer Bereich zur anderen Seite anschließt. Die üblichen Erweichungspunkte im Bereich von etwa 95-150°C sind über die Molmassenverteilungen einstellbar, sodass diese Harze wie im Übrigen auch andere Klebharze zur Einstellung des Glasübergangspunktes von Polyacrylat/Harz-Compounds eingesetzt werden können.

Die Molmassenverteilung von Makromolekülen wird üblicherweise über Mn (Zahlenmittel), Mw (Gewichtsmittel) und Mz (Zentrifugenmittel) beschrieben. Durch Division des Gewichtsmittels (Mw) durch das Zahlenmittel (Mn) erhält man die Polydispersität (Pd), die ein Maß für die Uneinheitlichkeit des Polymeren ist.

Im Rahmen der vorliegenden Schrift werden die Begriffe Molekulargewicht und Molmasse gleichbedeutend verwendet als Masse pro Stoffmenge.

Erfindungsgemäß wird dem Polyacrylathaftkleber ein Klebharz mit den vorstehend beschriebenen Eigenschaften zugesetzt. Es ist jedoch ebenfalls möglich, eine Mischung von mindestens zwei verschiedenen Klebharzen zu verwenden, von denen vorzugsweise jedes eine Molmassenverteilung aufweist, bei der das Integral der Kurve der Molmassenverteilung bis zu einer Molmasse von 350 g/mol mindestens 15% und vorzugsweise weniger als 20% der Gesamtfläche unter der Kurve der Molmassenverteilung ausmacht.

Die Herstellung eines erfindungsgemäßen Compounds ist auch möglich, wenn der Polyacrylathaftkleber in Form einer Dispersion vorliegt. In diesem Fall wird auch das mindestens eine Klebharz in Form einer Dispersion eingesetzt, wobei das Klebharz wiederum die erfindungsgemäße Molmassenverteilung aufweist.

Ein besonders geeigneter Haftklebstoff wird erhalten, wenn der Polyacrylathaftkleber chemisch oder physikalisch vernetzt wird, wobei die Vernetzung vorzugsweise durch Elektronenstrahlen erfolgt.

Ferner erfolgen die Masseaufträge auf dem niederenergetischen Untergrund zwischen 1 und 1000g/m² (trocken), vorzugsweise zwischen 10 und 300g/m² (trocken). Dabei wird eine besonders gute Haftung erreicht, wenn der niederenergetische Untergrund vor der Beschichtung coronavorbehandelt wird.

Die erfindungsgemäßen Haftklebemassen sind besonders geeignet für die Herstellung von Haftklebebändern, und zwar sowohl von einseitigen, doppelseitigen wie auch von Transferklebebändern. Als Trägermaterialien für die Klebebänder seien Folien (PET, Polyester, PE, PP, BOPP und PVC), Vliese, Schäume, Gewebe, Gewebefolien, Papier und Trennpapiere (Glassine, HDPE, LDPE) genannt.

Wie vorstehend dargelegt, wurde im Rahmen der Erfindung überraschend gefunden, dass eine gezielte Erhöhung des niedermolekularen Anteils in der Molmassenverteilung von Terpenphenolharzen in einer Polyacrylat-Matrix zu einer signifikanten Verbesserung der Wechselwirkung mit niederenergetischen Substraten führt, wie anhand der Ausführungsbeispiele im Folgenden näher beschrieben wird.

Dabei wurden die folgenden Prüfmethoden eingesetzt, um die erfindungsgemäß hergestellten Muster kurz zu charakterisieren:

### Gelpermeationschromatographie

Die Bestimmung des mittleren Molekulargewichtes M_{W} beziehungsweise des mittleren Molekulargewichtes M_{N} und der Polydispersität D erfolgte mittels Gelpermeationschromatographie (GPC). Als Eluent wurde THF mit 0,1 Vol.-% Trifluoressigsäure eingesetzt. Die Messung erfolgte bei 25 °C. Als Vorsäule wurde PSS-SDV, 5 µm, 103 Å (10-7 m), ID 8,0 mm x 50 mm verwendet. Zur Auftrennung wurden die Säulen PSS-SDV, 5 µm, 103 Å (10-7 m), 105 Å (10-5 m) und 106 Å (10-4 m) mit jeweils ID 8,0 mm x 300 mm eingesetzt. Die Probenkonzentration betrug 4 g/l, die Durchflussmenge 1,0 ml pro Minute. Es wurde gegen PMMA-Standards gemessen.

### Erweichungspunkt (R&B)

Die Angabe des Erweichungspunktes von polymeren Verbindungen erfolgt bezüglich des Ring-Kugel-Verfahrens durch entsprechende Anwendung der Bestimmungen der DIN EN 1427:2007 U(Untersuchung der polymeren Probe statt Bitumens bei ansonsten beibehaltener Verfahrensführung). Die Messungen erfolgen im Glycerolbad. Die Angaben zum Erweichungspunkt beziehen sich auf die Ergebnisse dieser Messung.

### Scherfestigkeit

Ein 13 mm breiter Streifen eines mit dem zu prüfenden Haftklebstoff beschichteten Klebebandes wurde auf eine glatte und gereinigte, senkrecht hängenden Stahloberfläche aufgebracht. Die Auftragsfläche betrug 20 mm x 13 mm (Länge x Breite). Anschließend wurde bei Raumtemperatur ein 1 kg-Gewicht an dem Klebeband befestigt und die Zeit bis zum Abfallen des Klebebandes von der Stahlplatte gemessen.

### Klebkraft Stahl 180°

Die Bestimmung der Klebkraft Stahl erfolgt bei einem Prüfklima von 23 °C +/- 1 °C Temperatur und 50 % +/- 5 % rel. Luftfeuchte. Die Muster eines mit dem zu prüfenden Haftklebstoff beschichteten Klebebandes werden auf 20 mm Breite zugeschnitten und auf eine Stahlplatte geklebt. Die Stahlplatte wird vor der Messung gereinigt und konditioniert. Dazu wird die Platte zunächst mit Aceton abgewischt und danach 5 Minuten an der Luft liegen gelassen, damit das Lösungsmittel abdampfen kann. Danach erfolgt das Anrollen des Prüfmusters auf den Stahluntergrund. Hierzu wird das Tape mit einer 2 kg Rolle fünfmal hin und her, bei einer Aufrollgeschwindigkeit von 10 m/min, überrollt. Unmittelbar nach dem Anrollen wird die Stahlplatte in eine spezielle Halterung geschoben, die es ermöglicht, das Muster in einem Winkel von 180 °C senkrecht nach oben abzuziehen. Die Klebkraftmessung erfolgt mit einer Zwick-Zugprüfmaschine. Die Messergebnisse sind in N/cm angegeben und sind gemittelt aus drei Messungen.

### Klebkraft Polyethylen

Ein 20 mm breiter Streifen einer auf Polyester als Schicht aufgebrachten zu prüfenden Haftklebemasse wurde auf eine HDPE-Platte aufgebracht, die zuvor zweimal mit Aceton und einmal mit Isopropanol gewaschen worden war. Der Haftklebestreifen wurde zehnmal mit einem 4kg-Gewicht auf das Substrat aufgedrückt. Das Klebeband wurde anschließend sofort mit 300 mm/min und in einem Winkel von 180° vom Substrat abgezogen. Die Messergebnisse sind in N/cm angegeben und sind gemittelt aus drei Messungen. Alle Messungen wurden bei Raumtemperatur unter klimatisierten Bedingungen durchgeführt.

### Rolling Ball Tack

Die Messung des Rolling-Ball-Tacks erfolgte nach der Methode PSTC-6 (Test Methods for Pressure Sensitive Adhesive Tapes, 15th Edition; Herausgeber: Pressure Sensitive Tape Council, Northbrook (Illinois), USA), wobei die folgenden Abwandlungen vorgenommen wurden:
- Verwendung von Edelstahl-Kugellagerkugeln (Edelstahl 1.4401), Durchmesser 7/16 Zoll, Masse 5,7 g
- Vorbereitung der Kugeln: Gründliche Reinigung mit Zellstoff und Aceton; die sauberen Kugeln werden vor der Messreihe für 15 min in einem Acetonbad gelagert (Kugeln sind vom Aceton vollständig umgeben); mindestens 30 min vor Beginn der Messung werden die Kugeln dem Acetonbad entnommen und zum Trocknen und Konditionieren offen im Normalklima (23 ± 1 °C, 50 ± 5 % rel. Feuchte) gelagert
- Jede Kugel wird nur für eine Messung verwendet.

Die Bestimmung der Anfassklebrigkeit wurde wie folgt durchgeführt: Als Maß für die Anfassklebrigkeit bei sehr kurzer Kontaktzeit wurde der so genannte "Rolling-Ball-Tack" gemessen. Ein etwa 30 cm langer Streifen eines mit dem zu prüfenden Haftklebstoff beschichteten Klebebandes wurde mit der klebenden Seite nach oben unter Spannung horizontal auf der Prüfebene befestigt. Zur Messung wurde die Stahlkugel durch Herabrollen von einer 65 mm hohen Rampe (Neigungswinkel: 21 °) im Schwerefeld der Erde beschleunigt. Von der Rampe wurde die Stahlkugel unmittelbar auf die klebende Oberfläche der Probe gelenkt. Der auf der Klebemasse bis zum Stillstand der Kugel zurückgelegte Weg wurde gemessen. Die so ermittelte Rollweglänge dient hierbei als inverses Maß für die Anfassklebrigkeit der Selbstklebemasse (das heißt, je kürzer der Rollweg ist, desto höher ist die Anfassklebrigkeit und umgekehrt). Der jeweilige Messwert ergab sich (als Längenangabe in mm) aus dem Mittelwert von fünf Einzelmessungen an jeweils fünf unterschiedlichen Streifen des Klebebandes.

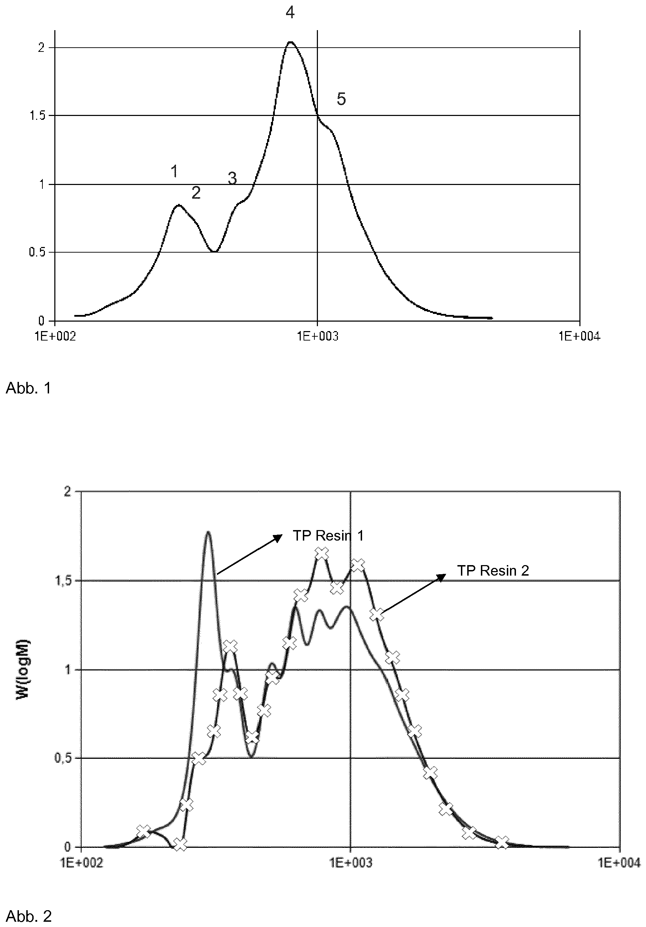

Eine typische Molmassenverteilung von Terpenphenolharzen, die mittels GPC ermittelt wurde, ist in Abb.1 dargestellt.

Wie aus der Abb. 1 zu entnehmen setzt sich die Molmassenverteilung gem. gelpermeationschromatographischer Untersuchung aus unterschiedlichen Peaks zusammen, die bestimmten Strukturelementen zugeordnet werden können. Die in Abb.1 mit den Zahlen 1,2 und 3 gekennzeichneten Peaks entsprechen Strukturelementen mit etwa 4-7 Struktureinheiten, die auf Pinen oder Phenol je nach Aufbau basieren können. Überraschenderweise wurde gefunden, dass diese Peaks einen signifikanten Einfluss auf die Klebkraft auf niederenergetischen Untergründen wie z.B. Polyethylen oder Polypropylen haben.

Legt man für Terpenphenolharze eine Molmassenverteilung zugrunde, die ein Mz von kleiner 5000, bevorzugt kleiner 3000 und besonders bevorzugt kleiner 1500 aufweist, so lassen sich überraschenderweise Bereiche definieren, die für eine Wechselwirkung mit niederenergetischen Untergründen besonders bedeutungsvoll sind. Dieser Bereich betrifft im Falle von Erweichungspunkten des Terpenphenolharzes bis 115°C Molmassen bis 350 g/mol. Untersuchungen an derartigen Terpenphenolharzen mit unterschiedlichen Molmassenverteilungen haben gezeigt, dass für eine gute Wechselwirkung mit niederenergetischen Oberflächen das Integral der Kurve der Molmassenverteilung bis zu einer Molmasse von 350 g/mol bezogen auf eine Kurve mit einem Mn von etwa 550, einem Mw von 850 und einem Mz von 1300 bei einer Polydispersität von etwa 1,6 mindestens 15%, bevorzugt kleiner als 20% der Gesamtfläche unter der Kurve der Molmassenverteilung sein muss.

Dabei wurde für Molmassenverteilungen, die jeweils das beschriebene Flächenkriterium erfüllen, gefunden, dass ein geringeres Flächenverhältnis (nahe der Untergrenze von 15%) in Richtung niedriger Molmassen durch eine höhere Intensität bei sehr niedrigen Molmassen im Bereich zwischen 100 und 350 g/mol teilweise ausgeglichen werden kann und ähnliche Werte erreicht werden können wie bei einem Terpenphenolharz, das eine vergleichsweise geringere Intensität im Bereich der niedrigen Molmassen, dafür aber höhere geringe Molmassen aufweist.

### Beispiele

Im Rahmen der Beispiele wurden sieben unterschiedliche Terpenphenolharze mit unterschiedlichen Erweichungspunkten eingesetzt. Die physikalischen Eigenschaften sind in Tabelle 1 zusammengefasst.

**Tabelle 1: Physikalische Daten Terpenphenolharze**

| Proben | R&B[°C] | Mn[g/mol] | Mw[g/mol] | Mz[g/mol] | Pd | Tg [°C] |
|---|---|---|---|---|---|---|
| TP Resin 1 | 105 | 558 | 833 | 1206 | 1,49 | 54 |
| TP Resin 2 | 105 | 653 | 902 | 1203 | 1,38 | 53 |
| TP Resin 3 | 95 | 556 | 875 | 1378 | 1,57 | 42,5 |
| TP Resin 4 | 95 | 550 | 781 | 1130 | 1,42 | 42 |
| TP Resin 5 | 115 | 588 | 788 | 1006 | 1,34 | 64 |
| TP Resin 6 | 115 | 592 | 801 | 1017 | 1,35 | 62 |
| TP Resin 7 | 115 | 622 | 850 | 1143 | 1,37 | 67 |

Die Molmassenverteilungen wurden via Gelpermeationschromatographie bestimmt. Die Molmassenverteilungen der Terpenphenolharze mit einem Erweichungspunkt von 105°C sind Abb.2 zu entnehmen, die Molmassen mit einem Erweichungspunkt von 95°C sind Abb. 3 zu entnehmen und die Molmassen mit einem Erweichungspunkt von 115°C sind Abb.4 zu entnehmen. In den Abbildungen ist jeweils die Intensität (y-Achse) über der Molmasse (x-Achse) aufgetragen.

Dabei weisen die Terpenphenolharze der Abb.2 die folgenden Kenngrößen auf:

| | Sample | Mn [g/mol] | Mw [g/mol] | Mz [g/mol] | Pd |
|---|---|---|---|---|---|
| 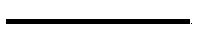 | TP Resin 1 R&B:105°C) | 558 | 833 | 1206 | 1,49 |
| 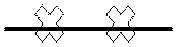 | TP Resin 2 R&B:105°C) | 653 | 902 | 1203 | 1,38 |

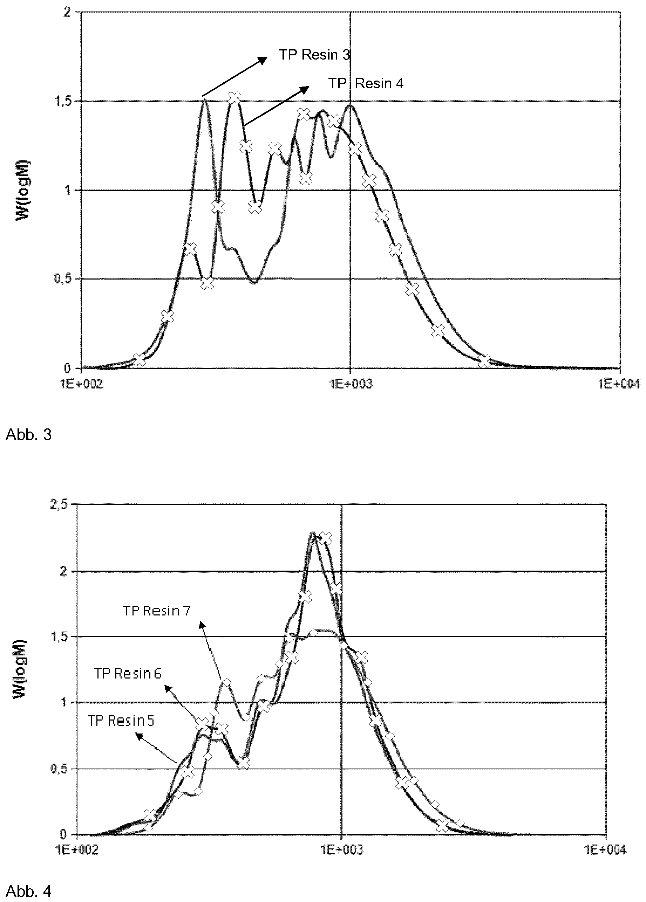

Und die Terpenphenolharze der Abb.3 weisen die folgenden Kenngrößen auf:

| | Sample | Mn [g/mol] | Mw [g/mol] | Mz [g/mol] | Pd |
|---|---|---|---|---|---|
| 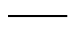 | TP Resin 3 (R&B:95°C) | 556 | 875 | 1378 | 1,57 |
| 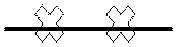 | TP Resin 4 (R&B:95°C) | 550 | 781 | 1130 | 1,42 |

Die Terpenphenolharze der Abb.4 weisen die folgenden Kenngrößen auf:

| | Sample | Mn [g/mol] | Mw [g/mol] | Mz [g/mol] | Pd |
|---|---|---|---|---|---|
| 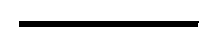 | TP Resin 5 (R&B:115°C) | 588 | 788 | 1006 | 1,34 |
| 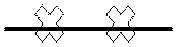 | TP Resin 6 (R&B:115°C) | 592 | 801 | 1017 | 1,35 |
| 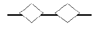 | TP Resin 7 (R&B: 115°C) | 622 | 850 | 1143 | 1,37 |

### Beispiel 1:

Ein durch radikalische Polymerisation in Ethylacetat hergestelltes Polyacrylatgerüstpolymeren, das auf 48,5% 2-Ethylhexylacrylat, 48,5% Butylacrylat und 3% Acrylsäure basiert, wird mit einem Terpenphenolharz mit einem Erweichungspunkt von 105°C (TP Resin1) im Verhältnis 70/30 (bezogen auf Feststoffgehalt) gemischt. Der so erhaltene Compound wird dann mit 0,3% Aluminiumchelat (bezogen auf Feststoffgehalt) versetzt.

Die erhaltene Lösung wird anschließend mit einem Streichbalken mit einem Masseauftrag von 50g/m² auf einer geätzten 36µm Polyethylenterephthalatfolie beschichtet. Das beschichtete Material wird dann für 15 Minuten bei Raumtemperatur vorgetrocknet und anschließend für 10 Minuten bei 120°C getrocknet und vernetzt. Dieses Muster wird im Folgenden Muster 1 genannt.

In einem zweiten Versuch wird ein durch radikalische Polymerisation in Ethylacetat hergestelltes Polyacrylatgerüstpolymeren, das auf 48,5% 2-Ethylhexylacrylat, 48,5% Butylacrylat und 3% Acrylsäure basiert, mit einem Terpenphenolharz mit einem Erweichungspunkt von 105°C aber veränderter Molmassenverteilung (TP Resin2) im Verhältnis 70/30 (bezogen auf Feststoffgehalt) gemischt. Der so erhaltene Compound wird dann mit 0,3% Aluminiumchelat (bezogen auf Feststoffgehalt) versetzt.

Die erhaltene Lösung wird anschließend mit einem Streichbalken mit einem Masseauftrag von 50g/m² auf einer geätzten 36µm Polyethylenterephthalatfolie beschichtet. Das beschichtete Material wird dann für 15 Minuten bei Raumtemperatur vorgetrocknet und anschließend für 10 Minuten bei 120°C getrocknet und vernetzt. Dieses Muster wird im Folgenden Muster 2 genannt.

Die beschichteten Materialien wurden klebtechnisch geprüft. Die Ergebnisse sind in Tabelle 2 zusammengefasst:

**Tabelle 2: Klebtechnische Daten Polyacrylat/Harz-Compound**

| Muster | Klebkraft Stahl (N/cm) | Klebkraft Polyethylen (N/cm) | Scherwerte bei 1 kg Belastung (min) | Rolling Ball Tack (mm) |
|---|---|---|---|---|
| 1 | 9,3 | 3,0 | 10000 | >250 |
| 2 | 9,4 | 1,5 | 10000 | >250 |

### Beispiel 2:

Ein durch radikalische Polymerisation in Ethylacetat hergestelltes Polyacrylatgerüstpolymeren, das auf 48,5% 2-Ethylhexylacrylat, 48,5% Butylacrylat und 3% Acrylsäure basiert, wird mit einem Terpenphenolharz mit einem Erweichungspunkt von 95°C (TP Resin 3) im Verhältnis 70/30 (bezogen auf Feststoffgehalt) gemischt. Der so erhaltene Compound wird dann mit 0,3% Aluminiumchelat (bezogen auf Feststoffgehalt) versetzt.

Die erhaltene Lösung wird anschließend mit einem Streichbalken mit einem Masseauftrag von 50g/m² auf einer geätzten 36µm Polyethylenterephthalatfolie beschichtet. Das beschichtete Material wird dann für 15 Minuten bei Raumtemperatur vorgetrocknet und anschließend für 10 Minuten bei 120°C getrocknet und vernetzt. Dieses Muster wird im Folgenden Muster 3 genannt.

In einem zweiten Versuch wird ein durch radikalische Polymerisation in Ethylacetat hergestelltes Polyacrylatgerüstpolymeren, das auf 48,5% 2-Ethylhexylacrylat, 48,5% Butylacrylat und 3% Acrylsäure basiert, mit einem Terpenphenolharz mit einem Erweichungspunkt von 95°C aber veränderter Molmassenverteilung (TP Resin4) im Verhältnis 70/30 (bezogen auf Feststoffgehalt) gemischt. Der so erhaltene Compound wird dann mit 0,3% Aluminiumchelat (bezogen auf Feststoffgehalt) versetzt.

Die erhaltene Lösung wird anschließend mit einem Streichbalken mit einem Masseauftrag von 50g/m² auf einer geätzten 36µm Polyethylenterephthalatfolie beschichtet. Das beschichtete Material wird dann für 15 Minuten bei Raumtemperatur vorgetrocknet und anschließend für 10 Minuten bei 120°C getrocknet und vernetzt. Dieses Muster wird im Folgenden Muster 4 genannt.

Die beschichteten Materialien wurden klebtechnisch geprüft. Die Ergebnisse sind in Tabelle 3 zusammengefasst:

**Tabelle 3: Klebtechnische Daten Polyacrylat/Harz-Compound**

| Muster | Klebkraft Stahl (N/cm) | Klebkraft Polyethylen (N/cm) | Scherwerte bei 1 kg Belastung (min) | Rolling Ball Tack (mm) |
|---|---|---|---|---|
| 3 | 9,5 | 3,8 | 10000 | >250 |
| 4 | 9,6 | 1,6 | 10000 | >250 |

### Beispiel 3:

Ein durch radikalische Polymerisation in Ethylacetat hergestelltes Polyacrylatgerüstpolymeren, das auf 48,5% 2-Ethylhexylacrylat, 48,5% Butylacrylat und 3% Acrylsäure basiert, wird mit einem Terpenphenolharz mit einem Erweichungspunkt von 115°C (TP Resin 5) im Verhältnis 70/30 (bezogen auf Feststoffgehalt) gemischt. Der so erhaltene Compound wird dann mit 0,3% Aluminiumchelat (bezogen auf Feststoffgehalt) versetzt.

Die erhaltene Lösung wird anschließend mit einem Streichbalken mit einem Masseauftrag von 50g/m² auf einer geätzten 36µm Polyethylenterephthalatfolie beschichtet. Das beschichtete Material wird dann für 15 Minuten bei Raumtemperatur vorgetrocknet und anschließend für 10 Minuten bei 120°C getrocknet und vernetzt. Dieses Muster wird im Folgenden Muster 5 genannt.

In einem zweiten Versuch wird ein durch radikalische Polymerisation in Ethylacetat hergestelltes Polyacrylatgerüstpolymeren, das auf 48,5% 2-Ethylhexylacrylat, 48,5% Butylacrylat und 3% Acrylsäure basiert, mit einem Terpenphenolharz mit einem Erweichungspunkt von 115°C aber veränderter Molmassenverteilung (TP Resin 6) im Verhältnis 70/30 (bezogen auf Feststoffgehalt) gemischt. Der so erhaltene Compound wird dann mit 0,3% Aluminiumchelat (bezogen auf Feststoffgehalt) versetzt.

Die erhaltene Lösung wird anschließend mit einem Streichbalken mit einem Masseauftrag von 50g/m² auf einer geätzten 36µm Polyethylenterephthalatfolie beschichtet. Das beschichtete Material wird dann für 15 Minuten bei Raumtemperatur vorgetrocknet und anschließend für 10 Minuten bei 120°C getrocknet und vernetzt. Dieses Muster wird im Folgenden Muster 6 genannt.

In einem dritten Versuch wird ein durch radikalische Polymerisation in Ethylacetat hergestelltes Polyacrylatgerüstpolymeren, das auf 48,5% 2-Ethylhexylacrylat, 48,5% Butylacrylat und 3% Acrylsäure basiert, mit einem Terpenphenolharz mit einem Erweichungspunkt von 115°C aber veränderter Molmassenverteilung (TP Resin 7) im Verhältnis 70/30 (bezogen auf Feststoffgehalt) gemischt. Der so erhaltene Compound wird dann mit 0,3% Aluminiumchelat (bezogen auf Feststoffgehalt) versetzt.

Die erhaltene Lösung wird anschließend mit einem Streichbalken mit einem Masseauftrag von 50g/m² auf einer geätzten 36µm Polyethylenterephthalatfolie beschichtet. Das beschichtete Material wird dann für 15 Minuten bei Raumtemperatur vorgetrocknet und anschließend für 10 Minuten bei 120°C getrocknet und vernetzt. Dieses Muster wird im Folgenden Muster 7 genannt.

Die beschichteten Materialien wurden klebtechnisch geprüft. Die Ergebnisse sind in Tabelle 4 zusammengefasst:

**Tabelle 4: Klebtechnische Daten Polyacrylat/Harz-Compound**

| Muster | Klebkraft Stahl (N/cm) | Klebkraft Polyethylen (N/cm) | Scherwerte bei 1 kg Belastung (min) | Rolling Ball Tack (mm) |
|---|---|---|---|---|
| 5 | 9,72 | 3,17 | 10000 | >250 |
| 6 | 9,79 | 4,26 | 10000 | >250 |
| 7 | 9,03 | 0,76 | 10000 | >250 |

Es zeigt sich, dass diejenigen Compounds, denen ein erfindungsgemäßes Klebharz zugesetzt wurde (Muster 1, 3, 5 und 6) eine signifikant bessere Klebkraft (mindestens Faktor 2) auf dem niederenergetischen Substrat Polyethylen aufweisen als die Vergleichsmuster.

## Patentansprüche

1. Verwendung eines Klebharzes mit einem Erweichungspunkt bis 115°C als Klebharz für Polyacrylathaftkleber für die Verklebung auf niederenergetischen Untergründen,
wobei das Klebharz eine Molmassenverteilung aufweist, die **dadurch gekennzeichnet ist, dass** das Integral der Kurve der Molmassenverteilung bis zu einer Molmasse von 350 g/mol mindestens 15% der Gesamtfläche unter der Kurve der Molmassenverteilung ausmacht,
und wobei das Klebharz ein Terpenphenolharz ist, wobei die Molmassenverteilung via Gelpermeationschromatographie bestimmt wird.

2. Verwendung nach Anspruch 1, **dadurch gekennzeichnet, dass** das Integral der Kurve der Molmassenverteilung bis zu einer Molmasse von 350 g/mol höchstens 20% der Gesamtfläche unter der Kurve der Molmassenverteilung ausmacht.

3. Verwendung einer Mischung von mindestens zwei verschiedenen Klebharzen nach einem der Ansprüche 1 oder 2.

4. Verwendung nach einem der Ansprüche 1 bis 3, **dadurch gekennzeichnet, dass**, wenn der Polyacrylathaftkleber in Form einer Dispersion vorliegt, auch das Klebharz in Form einer Dispersion eingesetzt wird.

5. Verwendung nach einem der Ansprüche 1 bis 4, **dadurch gekennzeichnet, dass** der Polyacrylathaftkleber chemisch oder physikalisch vernetzt wird, wobei die Vernetzung vorzugsweise durch Elektronenstrahlen erfolgt.

6. Verwendung nach einem der Ansprüche 1 bis 5, **dadurch gekennzeichnet, dass** die Masseaufträge auf dem niederenergetischen Untergrund zwischen 1 und 1000g/m² (trocken), vorzugsweise zwischen 10 und 300g/m² (trocken) liegen.

7. Verwendung nach einem der Ansprüche 1 bis 6, **dadurch gekennzeichnet, dass** der niederenergetische Untergrund vor der Beschichtung coronavorbehandelt wird.

8. Verwendung nach einem der Ansprüche 1 bis 7, **dadurch gekennzeichnet, dass** der Polyacrylathaftkleber mit dem Klebharz auf einem einseitig oder einem doppelseitig klebenden Klebeband oder einem Transferklebeband zur Verfügung gestellt wird.

## Claims

1. Use of a tackifier resin having a softening point of up to 115°C as tackifier resin for pressure-sensitive polyacrylate adhesives for bonding on low-energy substrates,
where the tackifier resin has a molar mass distribution **characterized in that** the integral of the curve of the molar mass distribution up to a molar mass of 350 g/mol accounts for at least 15% of the total area under the curve of the molar mass distribution,
and where the tackifier resin is a terpene-phenolic resin, the molar mass distribution being determined via gel permeation chromatography.

2. Use according to Claim 1, **characterized in that** the integral of the curve of the molar mass distribution up to a molar mass of 350 g/mol accounts for at most 20% of the total area under the curve of the molar mass distribution.

3. Use of a mixture of at least two different tackifier resins according to either of Claims 1 and 2.

4. Use according to any of Claims 1 to 3, **characterized in that**, if the pressure-sensitive polyacrylate adhesive is in the form of a dispersion, the tackifier resin is also used in the form of a dispersion.

5. Use according to any of Claims 1 to 4, **characterized in that** the pressure-sensitive polyacrylate adhesive is chemically or physically crosslinked, the crosslinking taking place preferably by electron beams.

6. Use according to any of Claims 1 to 5, **characterized in that** the mass applications on the low-energy substrate are between 1 and 1000 g/m² (dry), preferably between 10 and 300 g/m² (dry).

7. Use according to any of Claims 1 to 6, **characterized in that** the low-energy substrate is corona-pretreated prior to coating.

8. Use according to any of Claims 1 to 7, **characterized in that** the pressure-sensitive polyacrylate adhesive with the tackifier resin is provided on a single-sidedly or a double-sidedly adhesive tape or on an adhesive transfer tape.

## Revendications

1. Utilisation d'une résine adhésive ayant un point de ramollissement de jusqu'à 115 °C en tant que résine adhésive pour un adhésif de contact à base de polyacrylate pour le collage sur des substrats de faible énergie,
la résine adhésive présentant une distribution des masses molaires qui est **caractérisée en ce que** l'intégrale de la courbe de la distribution des masses molaires jusqu'à une masse molaire de 350 g/mol équivaut à au moins 15 % de l'aire totale sous la courbe de la distribution des masses molaires,
et la résine adhésive étant une résine de terpène-phénol, la distribution des masses molaires étant déterminée par chromatographie par perméation de gel.

2. Utilisation selon la revendication 1, **caractérisée en ce que** l'intégrale de la courbe de la distribution des masses molaires jusqu'à une masse molaire de 350 g/mol équivaut à au plus 20 % de l'aire totale sous la courbe de la distribution des masses molaires.

3. Utilisation d'un mélange d'au moins deux résines adhésives différentes selon l'une quelconque des revendications 1 ou 2.

4. Utilisation selon l'une quelconque des revendications 1 à 3, **caractérisée en ce que**, lorsque l'adhésif de contact à base de polyacrylate se présente sous la forme d'une dispersion, la résine adhésive est également utilisée sous la forme d'une dispersion.

5. Utilisation selon l'une quelconque des revendications 1 à 4, **caractérisée en ce que** l'adhésif de contact à base de polyacrylate est réticulé chimiquement ou physiquement, la réticulation ayant de préférence lieu par des faisceaux d'électrons.

6. Utilisation selon l'une quelconque des revendications 1 à 5, **caractérisée en ce que** les quantités appliquées sur le substrat de faible énergie sont comprises entre 1 et 1 000 g/m² (à sec), de préférence entre 10 et 300 g/m² (à sec).

7. Utilisation selon l'une quelconque des revendications 1 à 6, **caractérisée en ce que** le substrat de faible énergie est soumis à un prétraitement corona avant le revêtement.

8. Utilisation selon l'une quelconque des revendications 1 à 7, **caractérisée en ce que** l'adhésif de contact à base de polyacrylate est mis à disposition avec la résine adhésive sur une bande adhésive simple ou double face ou une bande adhésif de transfert.
